# EUROPÄISCHE PATENTSCHRIFT

(11) **EP 0 713 276 B1**
(45) Veröffentlichungstag und Bekanntmachung des Hinweises auf die Patenterteilung: **29.04.1998**
(21) Anmeldenummer: 95116731.1
(22) Anmeldetag: 24.10.1995
(51) Int. Cl.: H02B 1/38, E05D 5/02, E05D 1/04

(54) **Gehäuse**
Cabinet
Armoire

(30) Priorität: 17.11.1994 DE 9418391 U
(43) Veröffentlichungstag der Anmeldung: 22.05.1996
(73) Patentinhaber: Bernstein Classic GmbH & Co., D-32457 Porta Westfalica (DE)
(72) Erfinder: Wecke, Rolf, Dipl.-Ing., D-31675 Bückeburg (DE); Weiss, Jürgen, D-32312 Lübbecke (DE)
(74) Vertreter: Loesenbeck, Karl-Otto, Dipl.-Ing.

(56) Entgegenhaltungen:
- CH-A- 391 505
- FR-A- 1 443 292
- FR-A- 2 101 468
- GB-A- 2 160 257

## Beschreibung

Die vorliegende Erfindung betrifft ein Gehäuse entsprechend dem Oberbegriff des Anspruches 1.

Derartige Gehäuse, deren Seitenwände vorzugsweise aus Leichtmetall bestehen, finden beispielsweise als Steuergehäuse Verwendung, die Bestandteil von Maschinen sind und in denen die entsprechende Steuerelektrik untergebracht ist.

Um einen einfachen Zugriff auf die Steuerelektrik zu haben, weist das Gehäuse eine Tür auf, die bei einem Steuergehäuse vorzugsweise die Rückseite bildet, da vorderseitig Bedienungselemente vorgesehen sind.

Bislang ist es üblich, die Tür mit solchen Scharnieren einseitig an einer Seitenwand zu befestigen, die mehrteilig ausgebildet sind und beispielsweise aus Zapfen und darauf geführten Ösen, Augen o.dgl. bestehen. Dabei werden die Scharniere sowohl mit der Tür als auch mit der Seitenwand verschraubt.

Ein gattungsgemäßes Gehäuse ist aus der GB-A-2 160 257 bekannt.

Allerdings sind die darin gezeigten und beschriebenen Scharniere ebenso wie die anderer Gehäuse, beispielsweise solcher aus der CH-A-391 505 bekannten, nur mit einem erheblichen Fertigungsaufwand herstellbar, der mit entsprechenden Kosten verbunden ist.

Aber auch die Montage der bekannten Scharniere ist als nachteilig anzusehen, da diese eine paßgenaue Befestigung der Scharniere sowohl an der Tür als auch am zugeordneten Seitenteil erfordert.

Der vorliegenden Erfindung liegt daher die Aufgabe zugrunde, ein Gehäuse der gattungsgemäßen Art zu schaffen, dessen Scharniere einfacher und kostengünstiger herstellbar und montierbar sind.

Diese Aufgabe wird durch ein Gehäuse gelöst, das die Merkmale des Anspruches 1 aufweist.

Bei dieser konstruktiven Ausgestaltung sind die Scharniere praktisch einstückig ausgebildet. Hieraus ergeben sich erhebliche Kostenvorteile, insbesondere dann, wenn die Scharniere aus Leichtmetall gefertigt werden, wobei sie dann durch abschnittsweises Ablängen aus einem Strangpreßprofil gefertigt werden können.

Da dann, wenn das Gehäuse aus Leichtmetall besteht, die Seitenwände ebenfalls aus Strangpreßprofilen hergestellt sind, kann die Nut gleich bei der Herstellung des Strangpreßprofiles eingebracht werden.
Eine zusätzliche Bearbeitung erübrigt sich deshalb.
Das Scharnier, dessen in der Nut einliegender Schenkel zweckmäßigerweise in seiner Dicke der Breite der Nut entspricht, kann somit ohne weiteres in die Nut eingeschoben werden.

Zur Befestigung der Scharniere in der Nut können Schrauben oder Stifte vorgesehen sein, die die Nutwandung und den Scharnierschenkel durchtreten und für sichere Verbindung sorgen.

Da jedes Scharnier an jeder geeigneten Stelle der Nut eingesetzt werden kann, sind auch Fertigungsgenauigkeiten bezüglich der Plazierung der schlitzförmigen Aussparungen in der Tür nicht notwendig. Auch hieraus ergibt sich ein wesentlicher Vorteil.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnung beschrieben.

Die einzige Figur zeigt einen Teil eines erfindungsgemäßen Gehäuses in perspektivischer, teilweise in Explosivdarstellung.

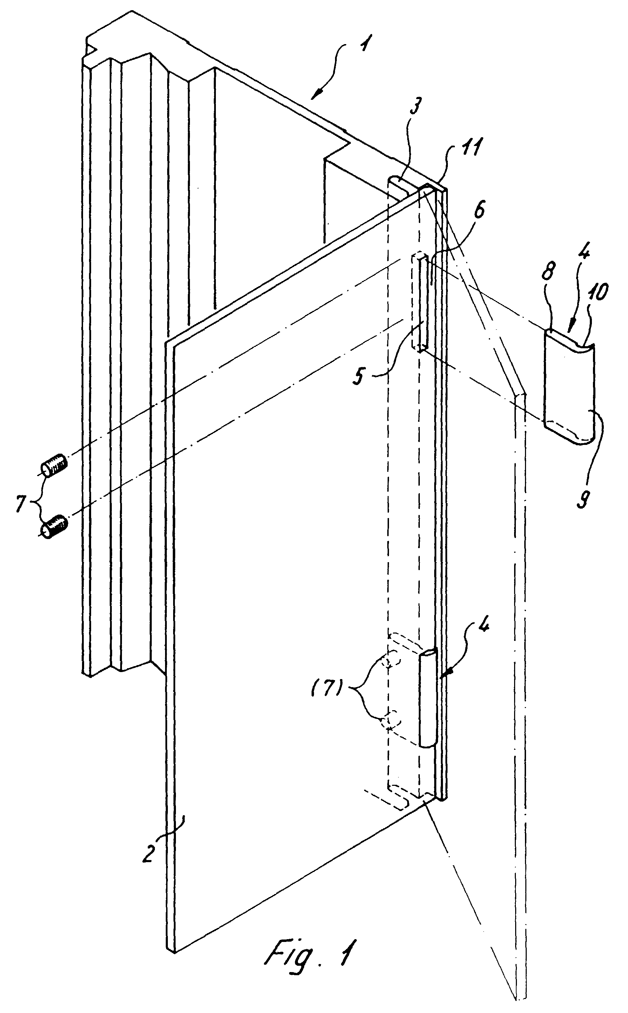

In der Fig. 1 ist ein Teil eines Gehäuses dargestellt, das eine Seitenwand 1 aufweist, die Bestandteil eines Korpusteiles ist, das einen Innenraum begrenzt und dessen Vorder- oder Rückseite durch eine Tür 2 verschließbar ist.

Diese Tür ist mittels Scharnieren 4 an der Seitenwand 1 angelenkt, wobei diese im Bereich der der Tür zugewandten Außenkante eine sich in Längsachsrichtung erstreckende, durchgehende Nut 3 aufweist, in der die Scharniere 4 festgelegt sind.

Die Scharniere 4 sind als Scharnierhaken ausgebildet und im Querschnitt etwa L-förmig gestaltet, wobei der längere Schenkel 8 eine Aussparung 5 der Tür 2 durchtritt und mittels Schrauben 7, die durch die Wandung der Nut 3 geführt werden, in dieser befestigt sind.

Der abgewinkelte, kurze Schenkel 9 des Scharnieres 4 ist zur Außenkante hin gerichtet und überdeckt den dieser zugewandten, benachbarten Randbereich 6 der Tür 2 zumindest teilweise.

Um ein Herausgleiten der Tür aus dem Scharnierhaken 4 auch in geöffneter Stellung zu verhindern, weist die Seitenwand 1 eine im Bereich der Nut 3 vorgesehene Auflagefläche 11 auf, die in etwa mit dem Schenkel 9 des Scharnierhakens 4 fluchtet.

Der lichte Abstand zwischen der Auflagefläche 11 und dem Scharnierhaken 4 entspricht in etwa der Dicke der Tür 2, so daß deren einwandfreies Verschwenken garantiert ist.

Zur besseren Verschwenkbarkeit ist außerdem die durch die Schenkel 8 und 9 gebildete, dem Randbereich 6 zugewandte Ecke als Hohlkehle 10 ausgebildet.

Da die Scharnierhaken 4 sowohl bei geöffneter als auch bei geschlossener Tür 2 kaum sichtbar sind, ergibt sich auch ein insgesamt verbesserte optische Darstellung des Gehäuses.

## Patentansprüche

1. Gehäuse, bestehend aus einem aus Seitenwänden (1) gebildeten Korpusteil mit einer daran mittels Scharnieren angelenkten Tür (2), wobei die scharnierseitige Seitenwand (1) mit einer sich in Längsachsrichtung erstreckenden, durchgehenden Nut (3) versehen ist, **dadurch gekennzeichnet**, daß in der Nut (3) im Querschnitt winkelförmige Scharnierhaken (4) befestigt sind, von denen jeweils einer eine in der Tür (2) vorgesehene schlitzförmige Aussparung (5) durchtritt und mit seinem abgewinkelten Schenkel (9) den der benachbarten Außenkante zugewandten Randbereich (6) zumindest teilweise überdeckt.

2. Gehäuse nach Anspruch 1, dadurch gekennzeichent, daß die Scharnierhaken (4) aus Abschnitten von Strangpreßprofilen bestehen.

3. Gehäuse nach Anspruch 1, dadurch gekennzeichnet, daß die Seitenwand (1) der Nut (3) benachbart eine Auflagefläche (11) aufweist, die in ihrer Breite etwa der Dicke der Tür (2) entspricht.

4. Gehäuse nach Anspruch 3, dadurch gekennzeichnet, daß die Außenkante der Auflagefläche (11) etwa mit der Außenseite des Schenkels (9) des Scharnierhakens (4) fluchtet.

5. Gehäuse nach Anspruch 1, dadurch gekennzeichnet, daß die Scharnierhaken (4) durch Schrauben (7), die die Wandung der Nut (3) durchtreten, befestigt sind.

6. Gehäuse nach Anspruch 1, dadurch gekennzeichnet, daß die durch die Schenkel (8,9) gebildete, dem Randbereich (6) zugewandte Ecke des Scharnierhakens (4) als Hohlkehle (10) ausgebildet ist.

## Claims

1. A housing comprising a body portion formed from side walls (1), with a door (2) pivotably mounted thereto by means of hinges, wherein the side wall (1) at the hinge side is provided with a continuous groove (3) extending in the longitudinal direction, characterised in that fixed in the groove (3) are hinge hooks (4) which are of angular cross-section and each of which passes through a respective slit opening (5) provided in the door (2) and with its angled limb (9) at least partially covers over the edge region (6) which is towards the adjacent outside edge.

2. A housing according to claim 1 characterised in that the hinge hooks (4) comprise portions of shaped extruded members.

3. A housing according to claim 1 characterised in that the side wall (1) adjacent the groove (3) has a contact surface (11) which approximately corresponds in its width to the thickness of the door (2).

4. A housing according to claim 3 characterised in that the outside edge of the contact surface (11) is approximately aligned with the outward side of the limb (9) of the hinge hook (4).

5. A housing according to claim 1 characterised in that the hinge hooks (4) are fixed by screws (7) which pass through the wall of the groove (3).

6. A housing according to claim 1 characterised in that the corner of the hinge hook (4), which is formed by the limbs (8, 9) and which is towards the edge region (6), is in the form of a channel (10).

## Revendications

1. Coffret, constitué d'un corps formé par des parois latérales (1) avec une porte (2) articulée sur celui-ci au moyen de charnières, la paroi latérale (1) côté charnières étant pourvue d'une rainure (3) continue, s'étendant dans la direction de l'axe longitudinal, caractérisé en ce que dans la rainure (3) sont fixés des crochets de charnière (4) de section angulée, dont chacun traverse une découpe (5) en forme de fente, prévue dans la porte (2) et recouvre au moins partiellement, par sa branche (9) coudée, la zone de bordure (6) tournée vers le bord extérieur voisin.

2. Coffret selon la revendication 1, caractérisé en ce que les crochets de charnière (4) sont faits de portions de profilés extrudés.

3. Coffret selon la revendication 1, caractérisé en ce que la paroi latérale (1) de la rainure (3) présente au voisinage une surface d'appui (11) dont la largeur correspond à peu près à l'épaisseur de la porte (2).

4. Coffret selon la revendication 3, caractérisé en ce que le bord extérieur de la surface d'appui (11) est à peu près aligné avec le côté extérieur de la branche (9) du crochet de charnière (4).

5. Coffret selon la revendication 1, caractérisé en ce que les crochets de charnière (4) sont fixés par des vis (7), qui traversent la paroi de la rainure (3).

6. Coffret selon la revendication 1, caractérisé en ce que l'angle du crochet de charnière (4), tourné vers la zone de bordure (6), formé par les branches (8, 9), se présente sous la forme d'une gorge creuse (10).
